# EUROPÄISCHE PATENTSCHRIFT

(11) **EP 0 510 660 B1**
(45) Veröffentlichungstag und Bekanntmachung des Hinweises auf die Patenterteilung: **21.09.1994**
(21) Anmeldenummer: 92107003.3
(22) Anmeldetag: 24.04.1992
(51) Int. Cl.: B23B 45/00, B25F 5/00, B23Q 5/14, F16D 11/00

(54) **Handwerkzeugmaschine**
Handtool
Outil à main

(30) Priorität: 26.04.1991 DE 4113649
(43) Veröffentlichungstag der Anmeldung: 28.10.1992
(73) Patentinhaber: ROBERT BOSCH GMBH, 70442 Stuttgart (DE)
(72) Erfinder: Gutknecht, Arnulf, W-7024 Filderstadt 4 (DE); Berger, Günther, W-7311 Notzingen (DE); Walz, Roland, W-7000 Stuttgart 80 (DE); Fischer, Helmut, W-7000 Stuttgart 80 (DE)

(56) Entgegenhaltungen:
- DE-A- 2 933 076
- DE-A- 2 936 338
- US-A- 3 869 030

## Beschreibung

Die Erfindung geht aus von einer Handwerkzeugmaschine, insbesondere Bohr- oder Schlagbohrmaschine der im Oberbegriff des Anspruchs 1 definierten Gattung.

Bei einer bekannten Bohr- oder Schlagbohrmaschine der eingangs genannten Art (DE 33 13 656 A1) weist das Zweiganggetriebe ein an der Abtriebswelle des Elektromotors ausgebildetes Zahnritzel, eine Vorgelegewelle mit darauf drehfest sitzendem Antriebszahnrad und drehfest sitzendem Antriebsritzel und zwei jeweils einer Getriebestufe zugeordnete Spindelzahnräder auf, die lose auf der Bohrspindel sitzen und von denen das eine Spindelzahnrad mit dem Antriebsritzel und das andere Spindelzahnrad mit dem Antriebszahnrad auf der Vorgelegewelle im ständigen Eingriff ist. Die Kupplung weist ein auf der Bohrspindel drehfest und axial manuell verschiebliches erstes Kupplungsteil und zwei mit jeweils einem der Spindelzahnräder einstückige zweite Kupplungsteile auf. Aufgrund der beiden zweiten Kupplungsteile enthält das erste Kupplungsteil in seinen Führungsbohrungen zwei Gruppen von Mitnehmerstiften, die auf beiden Seiten des ersten Kupplungsteils axial vorstehen und einmal zu dem einen zweiten Kupplungsteil und zum anderen zu dem anderen zweiten Kupplungsteil hin vorstehen. Jede Führungsbohrung ist als durchgehende Stufenbohrung mit zwei Bohrungsabschnitten mit unterschiedlichem Bohrungsdurchmesser ausgebildet, während die Mitnehmerstifte als Bolzen mit radial überstehender ringförmiger Anschlagschulter ausgebildet sind. Unter dem Druck von Druckfedern liegen die Bolzen mit ihren Anschlagschultern am Übergang der Bohrungsabschnitte an und stehen wechselweise auf jeder Seite über das erste Kupplungsteil vor. Die Druckfedern stützen sich jeweils an einem in die Bohrung eingesetzten und dort unverschieblich gehaltenen Stützring ab.

Bei einer ebenfalls bekannten Handwerkzeugmaschine der eingangs genannten Art (DE-A-2 936 338) weist das Zweiganggetriebe ein an der Abtriebswelle des Elektromotors ausgebildetes Zahnritzel, eine Vorgelegewelle mit darauf drehfest sitzendem Antriebszahnrad, drehfest sitzendem Antriebsritzel und drehbar und axial verschiebbarem Mitnehmerzahnrad sowie zwei jeweils einer Getriebestufe zugeordnete Spindelzahnräder auf. Das eine Spindelzahnrad steht mit dem Antriebsritzel und das andere Spindelzahnrad mit dem Mitnehmerzahnrad im ständigen Eingriff. Das letztere Spindelzahnrad sitzt drehfest auf der Werkzeugspindel, während das andere Spindelzahnrad drehbar auf einem Vorsprung dieses Spindelzahnrades sitzt und mit diesem durch eine Überholkupplung gekuppelt ist. Die Kupplung zur Gangumschaltung weist ein erstes und zweites Kupplungsteil auf, wobei das erste Kupplungsteil einstückig mit dem Antriebszahnrad und das zweite Kupplungsteil einstückig mit dem Mitnehmerzahnrad verbunden ist. Die Mitnehmerstifte im ersten Kupplunsteil werden durch drei Bolzen mit jeweils radial überstehender ringförmiger Anschlagschulter gebildet, die in drei um 120° gegeneinander versetzten Führungsbohrungen einliegen. Jede Führungsbohrung ist als durchgehende Stufenbohrung mit zwei Bohrungsabschnitten unterschiedlichen Bohrungsdurchmessers ausgebildet. Unter dem Druck von Druckfedern liegen die Bolzen mit ihrer Anschlagschulter am Übergang der Bohrungsabschnitte an und stehen über das erste Kupplungsteil hin zum zweiten Kupplungsteil vor. Die Druckfedern stützen sich ihrerseits an einer Scheibe ab, die auf der Vorgelegewelle mittels eines Sicherungsrings gehalten ist. Beim Verschieben des Mitnehmerzahnrades auf der Vorgelegewelle zwecks Gangumschaltung werden die Bolzen von dem Mitnehmerzahnrad axial verschoben, wobei die Druckfedern gespannt werden. Dreht sich das Mitnehmerzahnrad, so springen die Bolzen mit Federdruck in die Rastbohrungen in dem mit dem Mitnehmerzahnrad einstückigen zweiten Kupplungsteil, sobald diese mit den Rastbohrungen fluchten. Es entsteht ein Formschluß zwischen den Kupplungsteilen und damit zwischen dem Antriebszahnrad und dem Mitnehmerzahnrad.

Die Montage dieser Gangumschaltkupplung ist jedoch nicht unproblematisch, da die Druckfedern beim Einsetzen und Spannen durch die Haltescheibe leicht dazu neigen, umzuknicken. Außerdem ist durch die Vielzahl der Einzelteile die Montagezeit entsprechend lang.

### Vorteile der Erfindung

Die erfindungsgemäße Handwerkzeugmaschine mit den Merkmalen des Anspruchs 1 hat den Vorteil, daß die Gangumschaltkupplung nicht nur konstruktiv einfacher und damit kostengünstiger herstellbar ist, sondern auch wesentlich montagefreundlicher ist. Das Stanzteil wird einfach auf den Aufnahmezapfen des Kupplungsteils aufgeschoben und so gedreht, daß der mindestens eine Mitnehmerstift durch die Führungsbohrung hindurchgleitet. Damit ist bereits die Montage abgeschlossen. Das Stanzteil hält sich durch geeignete Ausbildung, z.B. durch Klemmbleche, selbst und kann ohne Zerstörung nicht vom Kupplungsteil axial abgeschoben werden. Beim Verschieben des axial beweglichen Kupplungsteils wird der mindestens eine Mitnehmerstift in die Führungsbohrung hineingeschoben, wobei die zugeordnete Federlasche in Achsrichtung ausgelenkt wird. Durch die Differenzdrehzahl der beiden Kupplungsteile fluchten zu irgendeinem Zeitpunkt der mindestens eine Mitnehmerstift in dem einen Kupplungsteil und die Rastbohrung in dem anderen Kupplungsteil, so daß der mindestens eine Mitnehmerstift sich unter der Wirkung der Federlasche in die mindestens eine Rastbohrung einschiebt. Es entsteht Formschluß und die andere Gangzahl ist eingelegt.

Durch die in den weiteren Ansprüchen aufgeführten Maßnahmen sind vorteilhafte Weiterbildungen und Verbesserungen der im Anspruch 1 angegebenen Handwerkzeugmaschine möglich.

Gemäß einer bevorzugten Ausführungsform der Erfindung ist der mindestens eine Mitnehmerstift an der Federlasche angeklebt oder angeschweißt. Es ist auch möglich den Mitnehmerstift als Blechschnitt aus der Federlasche auszubiegen und durch Anrollen eine entsprechende Formgebung zu verleihen.

Gemäß einer weiteren Ausführungsform der Erfindung läßt sich die Selbsthaltung des Stanzteils auf dem Aufnahmezapfen des einen Kupplungsteils in einfacher Weise durch mehrere, im Stanzteil ausgestanzte Klemmbleche realisieren, die in die zentrale Aufschiebeöffnung des Stanzteils hineinragen und deren lichter diametraler Abstand voneinander kleiner ist als der Durchmesser des Aufnahmzapfens.

Bei einer Handwerkzeugmaschine, bei welcher das Zweiganggetriebe ein an der Abtriebswelle des Elektromotors ausgebildetes Zahnritzel, eine Vorgelegewelle mit darauf drehfest sitzendem Antriebszahnrad, drehfest sitzendem Antriebsritzel und drehbar und axial verschiebbarem Mitnehmerzahnrad und zwei jeweils einer Getriebestufe zugeordnete Spindelzahnräder aufweist, von denen das eine Spindelzahnrad mit dem Antriebsritzel und das andere Spindelzahnrad mit dem Mitnehmerzahnrad ständig kämmt und beide Spindelräder durch eine Überholkupplung miteinander verbunden sind, ist gemäß einer bevorzugten Ausführungsform der Erfindung das eine Kupplungsteil mit dem Mitnehmerzahnrad und das andere Kupplungsteil mit dem Antriebszahnrad jeweils einstückig verbunden. In diesem Fall ist es zweckmäßig, daß der Aufnahmezapfen für das Stanzteil an dem einen Kupplungsteil von der Vorgelegewelle selbst gebildet ist.

### Zeichnung

Die Erfindung ist anhand eines in der Zeichnung dargestellten Ausführungsbeispiels in der nachfolgenden Beschreibung näher erläutert. Es zeigen:
- Fig. 1: ausschnittweise eine Seitenansicht einer Schlagbohrmaschine, teilweise geschnitten,
- Fig. 2: eine Draufsicht eines Stanzteils in einer Gangumschaltkupplung der Schlagbohrmaschine in Fig. 1,
- Fig. 3: eine Seitenansicht des Stanzteils.

### Beschreibung des Ausführungsbeispiels

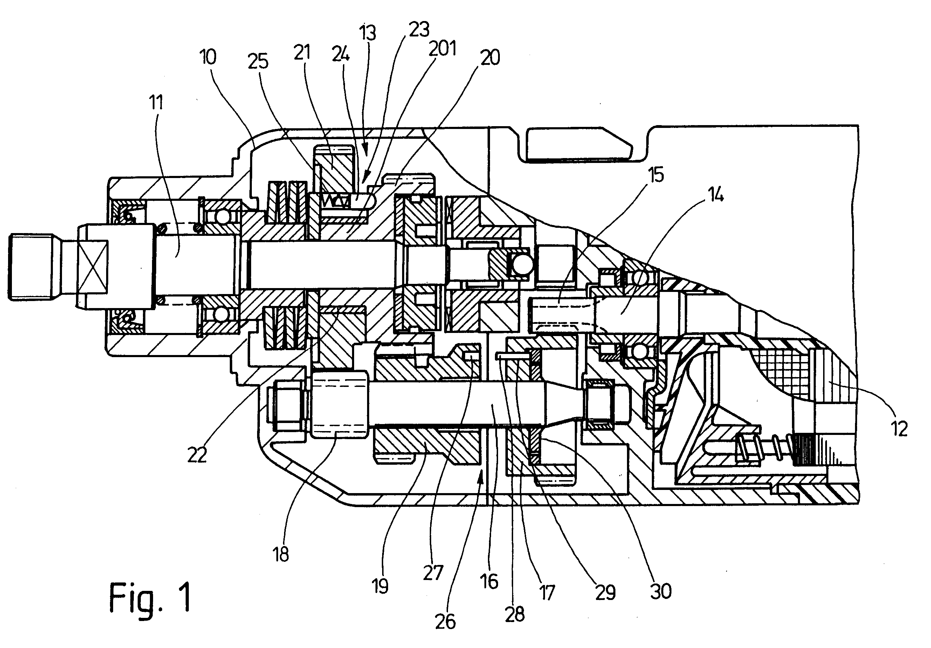

Die in Fig. 1 ausschnittweise und im wesentlichen im Längsschnitt dargestellte Schlagbohrmaschine als Beispiel für eine allgemeine Handwerkzeugmaschine hat ein Gehäuse 10, in welcher eine Werkzeug- oder Bohrspindel 11 drehbar gelagert und ein Elektromotor 12 und ein Zweiganggetriebe 13 zum Antrieb der Bohrspindel 11 aufgenommen ist. Das Zweiganggetriebe 13 umfaßt ein an der Abtriebswelle 14 des Elektromotors 12 ausgebildetes Zahnritzel 15, eine Vorgelegewelle 16, auf der ein Antriebszahnrad 17 und ein Antriebsritzel 18 jeweils drehfest sitzen und ein Mitnehmerzahnrad 19 drehbeweglich und axial verschieblich gelagert ist, und zwei auf der Bohrspindel 11 sitzende Spindelzahnräder 20,21. Das erste Spindelzahnrad 20 ist dabei drehfest mit der Bohrspindel 11 verbunden, während das zweite Spindelzahnrad 21 auf einer Buchse 22 frei drehend angeordnet ist, die auf einen mit dem ersten Spindelzahnrad 20 einstückigen Stutzen 201 aufgepreßt ist. Die Spindelzahnräder 20,21 sind durch eine Überholkupplung 23, bestehend aus federbelasteten Kupplungsstiften 24 und in Achsrichtung wirkenden Schraubendruckfedern 25,miteinander gekoppelt. Das erste Spindelzahnrad 20 steht im ständigen Eingriff mit dem Mitnehmerzahnrad 19 auf der Vorgelegewelle 16 und das zweite Spindelzahnrad 21 kämmt mit dem Antriebsritzel 18.

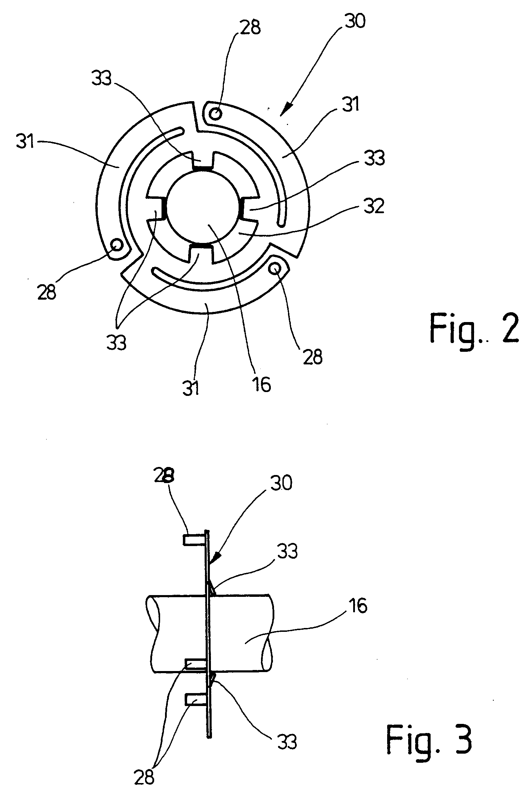

Zur Umschaltung des Zweiganggetriebes 13 von der einen in die andere Getriebestufe mit unterschiedlichen Antriebsdrehzahlen für die Bohrspindel 11 ist eine manuell betätigbare Umschaltkupplung 26 vorgesehen, deren beide Kupplungsteile einerseits in dem Antriebszahnrad 17 und andererseits in dem Mitnehmerzahnrad 19 integriert sind. Zur manuellen Betätigung der Umschaltkupplung 26 ist das Mitnehmerzahnrad 19 mittels eines hier nicht dargestellten, durch das Gehäuse 10 hindurchragenden Betätigungsstiftes auf der Vorgelegewelle 16 axial verschiebbar, wobei dessen Eingriff mit dem ersten Spindelzahnrad 20 in jeder Verschiebestellung erhalten bleibt. Das Mitnehmerzahnrad 19 trägt auf seiner dem Antriebszahnrad 17 zugekehrten Stirnseite drei um 120° Umfangswinkel zueinander versetzte sackartige Rastbohrungen 27 zur Aufnahme von drei entsprechenden Mitnehmerstiften 28, die in Führungsbohrungen 29 im Antriebszahnrad 17 axial verschieblich gehalten sind und durch Federbelastung an der dem Mitnehmerzahnrad 19 zugekehrten Stirnseite des Antriebszahnrades 17 hervorstehen. Die Führungsbohrungen 29 für die Mitnehmerstifte 28 sind wiederum um einen Umfangswinkel von 120° gegeneinander versetzt angeordnet. Die Mitnehmerstifte 28 sind an einem Stanzteil 30 aus Federstahlblech angebracht, das in Fig. 2 in Draufsicht und in Fig. 3 in Seitenansicht, jeweils mit der Vorgelegewelle 16, dargestellt ist. Das rotationssymmetrische Stanzteil 30 trägt außen drei in Umfangsrichtung sich erstreckende, hintereinanderliegende Federzungen oder Federlaschen 31 und innen eine zentrale Aufschiebeöffnung 32 zum Aufschieben auf die Vorgelegewelle 16. Sowohl die Federlaschen 31 als auch die Aufschiebeöffnung 32 sind durch Ausstanzen geformt. Am freien Ende einer jeden Federlasche 31 ist einer der drei Mitnehmerstifte 28 axial wegstehend angeordnet. Der Mitnehmerstift 28 kann dabei angeklebt oder angeschweißt sein. Er kann aber auch als Blechschnitt aus der Federlasche 31 ausgestanzt, ausgebogen und angerollt sein. Der lichte Durchmesser der Aufschiebeöffnung 32 ist wesentlich größer bemessen als der Durchmesser der Vorgelegewelle 16. Von dem die Aufschiebeöffnung 32 begrenzenden inneren Rand des Stanzteils 30 ragen vier im gleichen Umfangsabstand voneinander angeordnete Klemmbleche 33 in die Aufschiebeöffnung 32 hinein. Der diametrale lichte Abstand gegenüberliegender Klemmbleche 33 ist dabei etwas kleiner gewählt als der Außendurchmesser der Vorgelegewelle 16, so daß beim Aufschieben des Stanzteils 30 die Klemmbleche 33 leicht entgegen der Aufschieberichtung abgebogen werden, wie dies in Fig. 3 dargestellt ist, und eine Selbsthaltung des Stanzteils 30 auf der Vorgelegewelle 16 sicherstellen.

Bei der Montage wird das Stanzteil 30 auf der vom Mitnehmerzahnrad 19 abgekehrten Seite des Antriebszahnrades 17 so auf die Vorgelegewelle 16 aufgeschoben, daß die Mitnehmerstifte 28 mit den Führungsbohrungen 29 fluchten, so daß sie durch die Führungsbohrungen 29 hindurchtreten können, um dann bei Anliegen des Stanzteils 30 am Antriebszahnrad 17 an dessen dem Mitnehmerzahnrad 19 zugekehrten Seite wie beschrieben vorzustehen. Die sich beim Aufschiebevorgang ausbiegenden Klemmbleche 33 verhindern, daß das Stanzteil 30 gegen die Aufschieberichtung von der Vorgelegewelle 16 wieder abgeschoben werden kann.

Die Funktionsweise der Umschaltkupplung 26 ist wie folgt:
In der in Fig. 1 dargestellten Stellung des Mitnehmerzahnrades 19 besteht ein Kraftfluß von dem Zahnritzel 15 über das Antriebsrad 17, die Vorgelegewelle 16, das Antriebsritzel 18 zu dem zweiten Spindelzahnrad 21. Dieses wird mit kleiner Drehzahl angetrieben und dreht über die Überholkupplung 23 das erste Spindelzahnrad 20 und somit die Bohrspindel 11. Zum Umschalten in die Getriebestufe mit höherer Bohrspindeldrehzahl wird das Mitnehmerzahnrad 19 auf der Vorgelegewelle 16 axial in Richtung zum Antriebszahnrad 17 verschoben. Dabei werden die Mitnehmerstifte 28 von der Stirnseite des Mitnehmerzahnrades 19 axial verschoben und in die Führungsbohrungen 29 hineingedrückt, wobei die drei Federlaschen 31 in Axialrichtung ausgebogen werden. Durch die Differenzdrehzahl zwischen dem Mitnehmerzahnrad 19 und dem Antriebszahnrad 17 werden zu einem Zeitpunkt die drei Mitnehmerstifte 28 im Antriebszahnrad 17 mit den drei korrespondierenden Rastbohrungen 27 im Mitnehmerzahnrad 19 fluchten, so daß die Federlaschen 31 die Mitnehmerstifte 28 nunmehr in die Rastbohrungen 27 einschieben. Damit entsteht Formschluß zwischen dem Antriebszahnrad 17 und dem Mitnehmerzahnrad 19, und über das Mitnehmerzahnrad 19 wird das erste Spindelzahnrad 20 und damit die Bohrspindel 11 mit höherer Drehzahl angetrieben. Die Überholkupplung 23 ermöglicht dabei, daß das erste Spindelzahnrad 20 sich vom zweiten Spindelzahnrad 21 abkuppelt und letzteres, angetrieben durch das Antriebsritzel 18, frei auf der Buchse 22 dreht.

Soll das Zweiganggetriebe 13 wieder in die niedrigere Getriebestufe umgeschaltet werden, so ist das Mitnehmerzahnrad 19 wieder in eine in Fig. 1 dargestellte Lage zurückzuschieben. Damit ist die drehfeste Verbindung zwischen Mitnehmerzahnrad 19 und Antriebszahnrad 17 wieder aufgehoben, und die Bohrspindel 11 wird über den Formschluß zwischen zweitem Spindelzahnrad 21 und erstem Spindelzahnrad 20 angetrieben.

## Patentansprüche

1. Handwerkzeugmaschine,inbesondere Bohr- oder Schlagbohrmaschine, mit einer mittels eines Elektromotors (12) antreibbaren Werkzeugspindel (11) für ein Werkzeug, insbesondere Bohrer, mit einem zwischen Abtriebswelle (14) des Elektromotors und Werkzeugspindel angeordneten Zweiganggetriebe (13) und mit einer manuell betätigbaren Kupplung (26) zum Einlegen der einen oder anderen Getriebestufe, die ein axial verschiebbares und mindestens ein axial unverschiebliches jeweils mitdrehendes Kupplungsteil (19,17) und mindestens einen in einer Führungsbohrung (29) axial verschiebbaren, in Verschieberichtung federbelasteten Mitnehmerstift (28) in dem einen Kupplungsteil und mindestens eine axiale Rastbohrung (27) zum Einrasten des Mitnehmerstiftes in dem anderen Kupplungsteil aufweist, dadurch gekennzeichnet, daß der mindestens eine Mitnehmerstift (28) an einer federnden Lasche (31) eines Stanzteils (30) aus Federstahlblech, von dieser axial wegstehend, angebracht ist, das in Achsrichtung selbsthaltend auf einem Aufnahmezapfen (16) am Kupplungsteil (17) derart aufgeschoben ist, daß der mindestens eine Mitnehmerstift (28) durch die Führungsbohrung (29) hindurchtritt und aus dem Kupplungsteil (17) zum anderen Kupplungsteil (19) hin vorsteht.

2. Maschine nach Anspruch 1, dadurch gekennzeichnet, daß der mindestens eine Mitnehmerstift (28) an der federnden Lasche (31) angeklebt, angeschweißt oder als Blechschnitt aus der Lasche (31) ausgebogen und angerollt ist.

3. Maschine nach Anspruch 1 oder 2, dadurch gekennzeichnet, daß das Stanzteil (30) mehrere in seine zentrale Aufschiebeöffnung (32) hineinragende Klemmbleche (33) aufweist, deren lichter diametraler Abstand voneinander etwas kleiner ist als der Durchmesser des Aufnahmezapfens (16) am Kupplungsteil (17).

4. Maschine nach einem der Ansprüche 1 - 3, dadurch gekennzeichnet, daß der mindestens eine Mitnehmerstift (28) am unverschieblichen Kupplungsteil (17) und die mindestens eine Rastbohrung (27) am verschieblichen Kupplungsteil (19) angeordnet ist.

5. Maschine nach Anspruch 4, dadurch gekennzeichnet, daß das Zweiganggetriebe (13) ein an der Abtriebswelle (14) des Elektromotors (12) ausgebildetes Zahnritzel (15), eine Vorgelegewelle (16) mit darauf drehfest sitzendem Antriebszahnrad (17), drehfest sitzendem Antriebsritzel (18) drehbar und axial manuell verschiebbarem Mitnehmerzahnrad (19) und zwei jeweils einer Getriebestufe zugehörige Spindelzahnräder (20,21) aufweist, wobei das eine Spindelzahnrad (20) mit dem Mitnehmerzahnrad (19) und das andere Spindelzahnrad (21) mit dem Antriebsritzel (18) ständig kämmt und die Spindelzahnräder (20,21) durch eine Überholkupplung (23) miteinander verbunden sind, und daß das eine Kupplungsteil mit dem Mitnehmerzahnrad (19) und das andere Kupplungsteil mit dem Antriebszahnrad (17) jeweils einstückig verbunden ist.

6. Maschine nach Anspruch 5, dadurch gekennzeichnet, daß der Aufnahmezapfen des Kupplungsteils (17) zum Aufschieben des Stanzteils (30) von der Vorgelegewelle (16) selbst gebildet ist.

## Claims

1. Hand machine tool, particularly a drill or percussion drill, having a tool spindle (11), which can be driven by means of an electric motor (12), for a tool, particularly a drill bit, also having a two-speed gear train (13) arranged between the output shaft (14) of the electric motor and the tool spindle, and having a manually operable clutch (26) for the engagement of one or the other gear stage, said clutch having clutch parts (19, 17) of which one is axially movable and at least one is axially immovable and each of which is co-rotatable and having in the one clutch part at least one driver pin (28) which is axially movable in a guide bore (29) and is spring-loaded in the direction of axial movement, and having in the other clutch part at least one axial catch bore (27) for the catch engagement of the driver pin, characterized in that the at least one driver pin (28) is attached to a resilient flap (31) of a stamping (30) of spring steel sheet and projects axially from said flap, said stamping being pushed self-lockingly in the axial direction onto a mounting pin (16) on the clutch part (17) in such a manner that the at least one driver pin (28) passes through the guide bore (29) and projects out of the clutch part (17) in the direction of the other clutch part (19).

2. Machine tool according to Claim 1, characterized in that the at least one driver pin (28) is secured by adhesive or by welding to the resilient flap (31) or, as a cut in the sheet, is bent out of the flap (31) and rolled up.

3. Machine tool according to Claim 1 or 2, characterized in that the stamping (30) has a plurality of clamp plates (33) which project into its central mounting opening (32) and the clear diametral distance between which is somewhat shorter than the diameter of the mounting pin (16) on the clutch part (17).

4. Machine tool according to one of Claims 1 to 3, characterized in that the at least one driver pin (28) is arranged on the axially immovable clutch part (17) and the at least one catch bore (27) is arranged in the axially movable clutch part (19).

5. Machine tool according to Claim 4, characterized in that the two-speed gear train (13) comprises a pinion (15) which is formed on the output shaft (14) of the electric motor (12), a countershaft (16) having a driving gear (17) fixed for rotation therewith, a driving pinion (18) fixed for rotation therewith and a rotatable and manually axially movable driven gear (19), and two spindle gears (20, 21) each associated with a gear stage, the one spindle gear (20) being in constant mesh with the driven gear (19) and the other spindle gear (21) being in constant mesh with the driving pinion (18), and the spindle gears (20, 21) being connected to one another by an over-running clutch (23), and in that the one clutch part is integrally joined to the driven gear (19) and the other clutch part is integrally joined to the driving gear (17).

6. Machine tool according to Claim 5, characterized in that the mounting pin of the clutch part (17) onto which the stamping (30) is pushed is formed by the countershaft (16) itself.

## Revendications

1. Outil motorisé à main, en particulier perceuse avec ou sans percussion, comprenant une broche (11) entraînée par un moteur électrique (12) et pouvant recevoir un outil, notamment un foret, un train d'engrenages à deux vitesses (13) reliant l'arbre de sortie (14) du moteur électrique et la broche de l'outil et équipé d'un accouplement (26) permettant de sélectionner à la main l'un ou l'autre des rapports, cet accouplement comportant une partie tournante (19) coulissant axialement et au moins une autre partie tournante axialement fixe (17),une de ces deux parties contenant, mobile axialement dans un alésage de guidage (29), au moins une tige de liaison (28) sous tension élastique dans la direction de coulissement tandis que l'autre partie présente au moins un trou d'arrêt (27) servant à retenir la tige de liaison, caractérisé en ce qu'une tige de liaison (28) au moins est montée débordante en direction axiale sur une languette élastique (31) d'une pièce (30) découpée dans une tôle élastique et axialement montée en auto-maintien sur une tige réceptrice (16) de la partie (17) de l'accouplement, par coulissement de manière qu'au moins une tige de liaison (28) traverse l'alésage de guidage (29) et dépasse la partie (17) en direction de l'autre partie (19).

2. Outil motorisé selon la revendication 1, caractérisé en ce qu'au moins une tige de liaison (28) est fixée sur la languette élastique (31) par collage ou soudure ou est formée, à partir de la languette, par pliage et roulage.

3. Outil motorisé selon la revendication 1 ou 2, caractérisé en ce que la pièce découpée (30) présente plusieurs tôles de pincement (33) pénétrant dans son ouverture de glissement (32) et espacées diamétralement d'une valeur inférieure au diamètre de la tige réceptrice (16) de la partie d'accouplement (17).

4. Outil motorisé selon une des revendications 1 à 3, caractérisé en ce que la partie d'accouplement (17) non coulissante porte au moins une tige de liaison tandis que la partie d'accouplement (19) coulissante porte au moins un trou d'arrêt (27).

5. Outil motorisé selon la revendication 4, caractérisé en ce que le train d'engrenages à deux vitesses (13) comporte un pignon (15) denté directement à l'extrémité de l'arbre de sortie (14) du moteur électrique (12), un arbre intermédiaire (16) portant une roue dentée motrice (17) solidaire en rotation et une roue dentée motrice (18) solidaire en rotation et une roue d'entrée (19) d'entraînement mais pouvant coulisser axialement manuellement, deux roues dentées (20, 21) portées par la broche et associées chacune à un des deux rapports de vitesse, ces roues étant constamment en prise l'une (20) avec la roue dentée de liaison (19) et l'autre (21) avec le pignon d'entraînement (18) tout en étant reliées entre elles par un embrayage à roue libre (23), les roues dentées (19) et (17) constituant des ensembles monobloc avec l'une et l'autre des parties, respectivement, de l'accouplement.

6. Outil motorisé selon la revendication 5, caractérisé en ce que la tige réceptrice de la partie d'accouplement (17) sur laquelle est montée par coulissement, la pièce découpée (30) est constituée par l'arbre intermédiaire (16), lui-même.
